# EUROPÄISCHE PATENTSCHRIFT

(11) **EP 3 073 002 B1**
(45) Veröffentlichungstag und Bekanntmachung des Hinweises auf die Patenterteilung: **12.06.2019**
(21) Anmeldenummer: 16151270.2
(22) Anmeldetag: 14.01.2016
(51) Int. Cl.: D02G 3/48, B60C 9/00, B60C 9/18

(54) **FESTIGKEITSTRÄGER FÜR ELASTOMERE ERZEUGNISSE, INSBESONDERE FÜR DIE GÜRTELBANDAGE VON FAHRZEUGLUFTREIFEN**
REINFORCING SUBSTRATE FOR ELASTOMER PRODUCTS, IN PARTICULAR FOR THE BELT COVER LAYER OF VEHICLE PNEUMATIC TYRES
SUPPORT DE FIXATION POUR PRODUITS EN ELASTOMERE, NOTAMMENT POUR LA BANDAGE DE LA CEINTURE DE PNEUS DE VEHICULES

(30) Priorität: 26.03.2015 DE 102015205474
(43) Veröffentlichungstag der Anmeldung: 28.09.2016
(73) Patentinhaber: Continental Reifen Deutschland GmbH, 30165 Hannover (DE)
(72) Erfinder: Reese, Wolfgang, 31228 Peine (DE); Kramer, Thomas, 32049 Herford (DE)
(74) Vertreter: Finger, Karsten

(56) Entgegenhaltungen:
- EP-A1- 1 431 076
- EP-A1- 2 810 791
- EP-A1- 2 865 541
- EP-A2- 2 806 057
- US-A- 4 343 343
- US-A1- 2014 150 398

## Beschreibung

Die Erfindung betrifft Festigkeitsträger für elastomere Erzeugnisse, insbesondere für die Gürtelbandage von Fahrzeugluftreifen, wobei der Festigkeitsträger einen geradlinigen Kern und einen diesen Kern umgebenden Mantel aufweist, wobei der Kern aus genau einem textilen Garn aus miteinander erstverdrehten Fasern gebildet ist und wobei der Mantel textile hochmodulige Endlosfasern aufweist. Weiter betrifft die Erfindung eine Festigkeitsträgerlage für elastomere Erzeugnisse aufweisend eine solchen Festigkeitsträger sowie einen Fahrzeugluftreifen aufweisend eine solche Festigkeitsträgerlage.

Um bei Fahrzeugluftreifen, insbesondere im Hochgeschwindigkeitseinsatz, eine Erhebung des Reifens durch die im Fahrbetrieb auftretenden Fliehkräfte zu verhindern, ist es bekannt, bei einem Fahrzeugluftreifen eine Gürtelbandage vorzusehen. Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt in der Regel zumindest die Gürtelränder ab. Die Gürtelbandage enthält üblicherweise parallel und im Wesentlichen in Umfangsrichtung verlaufende Festigkeitsträger, die in Gummi eingebettet sind.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel zur besseren Haftung am einbettenden Gummi in einer dem Fachmann bekannten Art mit einer Imprägnierung vorbehandelt sind, in Längsrichtung einen Kalander oder einen Extruder zur Ummantelung mit der Kautschukmischung durchlaufen.

Die Festigkeitsträger der Gürtelbandage sollen bei der Reifenherstellung eine ausreichende Erhebung bei der Bombage sowie in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Um diesen Anforderungen zu genügen, sollten die Festigkeitsträger einen für die Reifenherstellung ausreichend moderaten Anfangs-Elastizitätsmodul aufweisen und sich bis zu einer Dehnung von ca. 3 bis 4 % mit mäßigem Kraftaufwand dehnen lassen und ab einer höheren Dehnung nur noch mit sehr hohem Kraftaufwand dehnen lassen.

Als Festigkeitsträger für die Gürtelbandage sind schon unterschiedliche Festigkeitsträger vorgeschlagen worden. In der DE 41 35 599 C2 werden als Festigkeitsträger der Gürtelbandage Festigkeitsträger offenbart, die einen geradlinigen Kern aus einem Garn aus miteinander erstverdrehten Polyester- oder Polyamid-Filamenten und einen den Kern umgebenden Mantel aus Garnen, welche jeweils aus miteinander erstverdrehten Aramid-Fasern gebildet und helixförmig um den Kern herumgeschlungen sind, aufweisen. Das Zusammenfügen des Kerns und des Mantels erfolgt, ohne dass Mantel und Kern miteinander verdreht werden.

Eine solche Hybridkonstruktion mit Kern und Mantel erlaubt ein Dehnverhalten, das bei geringer Verformung durch das Dehnverhalten des Kerns dominiert wird. Die helixförmig angeordneten Aramid-Garne des Mantels erfahren v.a. konstruktive Dehnung. Bei größerer Verformung hingegen kommen die Fäden des Mantels in ihre Eigendehnung, wodurch das Dehnverhalten vom im Vergleich zum Kern höheren Elastizitätsmodul der Garne aus Aramid-Fasern bestimmt ist. Das Kraft-Dehnungs-Verhalten ermöglicht die Erhebung bei der Bombage und der Vulkanisation des Reifens und macht den Reifen hochgeschwindigkeitstauglich

Die Entwicklung geht dahin, den Rollwiderstand des Reifens zu reduzieren. Aus der 13ist ein Reifenkord bekannt, der einen Kern aus einem Garn aus miteinander erstverdrehten Filamenten und einen Mantel aus einem oder mehreren weiteren Garnen aus miteinander erstverdrehten Filamenten, welche helixförmig um den Kern gewickelt sind. Bei den Filamenten handelt es sich um hochfeste Hochmodulfilamente, beispielsweise um Aramidfilamente. Ein solcher Reifenkord, dessen Kern und Mantel aus hochmoduligen Filamenten gebildet ist, weist vorteilhafte Hystereseeigenschaften auf, wodurch der Rollwiderstand verbessert ist.

Eine eventuelle geringe Bruchdehnung der Garne aus miteinander verdrehten Aramid-Fasern kann allerdings zum Bruch der Festigkeitsträger im Einsatz oder bereits bei der Reifenherstellung bzw. bei der Reifenmontage führen.

Aus der EP 2 806 057 A2 ist ein Festigkeitsträger aufweisend einen Kern und einen Mantel bekannt, wobei der Kern durch ein Garn aus Nylon und der Mantel durch ein diesen Kern umschlingendes Garn aus Aramid gebildet ist. Sowohl das Garn des Kerns als auch das Garn des Mantels weisen jeweils eine Erstverdrehung von 4 bis 6 Verdrehungen pro 2,54 cm auf.

Der in der EP 1 431 076 A1 offenbarte Festigkeitsträger weist einen Kern aus miteinander erstverdrehten Nylon-Filamenten auf. Der Mantel des Festigkeitsträgers ist gebildet aus zwei oder drei Garnen, welche jeweils aus miteinander erstverdrehten Aramid-Filamenten gebildet sind. Die zwei oder drei Garne sind um den Kern gewunden.

In der EP 2 810 791 A1 ist ein Festigkeitsträger offenbart, dessen Kern und dessen Mantel jeweils aus einem Garn aus miteinander erstverdrehten Filamenten gebildet ist.

Die US 4 343 343 A offenbart einen Kern aus einem Monofilament oder aus mehreren Filamenten gebildet. Der Mantel ist aus zumindest einem Garn aus einer Vielzahl an miteinander erstverdrehten Filamenten gebildet.

Die EP 2 865 541 A1 offenbart einen Festigkeitsträger mit einem Kern und einem Mantel, welche jeweils aus Endlosfasern gebildet sind. Die Endlosfasern des Mantels sind dabei miteinander erstverdreht.

Die US 2014/150398 A1 offenbart einen Festigkeitsträger, der einen Kern aufweisend eine Endlosfasern und einen Mantel aufweisend ein Stapelfasergarn offenbart.

Der vorliegenden Erfindung liegt die Aufgabe zu Grunde, einen Festigkeitsträger für elastomere Erzeugnisse, insbesondere für die Gürtelbandage von Fahrzeugluftreifen, bereitzustellen, welcher die Haltbarkeit des elastomeren Erzeugnisses erhöht. Zudem soll sich der Festigkeitsträger durch ein Kraft-Dehnungs-Verhalten auszeichnen, das bei Verwendung der Festigkeitsträgerlage, insbesondere als Gürtelbandage in Fahrzeugluftreifen, einen problemlosen Reifenbau samt Vulkanisation ermöglicht und dem Reifen noch bessere Hochgeschwindigkeits- und Rollwiderstandseigenschaften verleiht.

Die Aufgabe wird gelöst, indem das Garn des Kerns ein niedermoduliges Stapelfasergarn aus Fasern begrenzter Länge, welche miteinander erstverdreht sind, ist, indem die hochmoduligen Endlosfasern des Mantels den Kern in etwa helixförmig umwinden und indem das Stapelfasergarn Fasern begrenzter Länge aus einem hochmoduligen Material aufweist.

Bedeutend ist hierbei die Kombination aus einem niedermoduligen Stapelfasergarn im Kern und den in etwa helixförmig angeordneten hochmoduligen Endlosfasen des Mantels.

Ein "Garn" ist im Rahmen der vorliegenden Erfindung in Anlehnung an die DIN 60900 ein linienförmiges Gebilde aus textilen Faserstoffen. Ein "Stapelfasergarn" ist ein Garn aus Fasern begrenzter Länge, die miteinander erstverdreht sind. Eine "Endlosfaser" (auch Filament genannt) ist in Anlehnung an die DIN 60000 eine Faser praktisch unbegrenzter Länge. Auch eine einzelne Endlosfaser ist ein Garn.

Mit dem Begriff "niedermoduliges Garn" ist ein Garn gemeint, welches bei geringer Dehnung ein niedermoduliges Kraft-Dehnungs-Verhalten aufweist. Mit dem Begriff "hochmoduliges Garn" bzw. "hochmodulige Endlosfaser" ist ein Garn gemeint, welches bei geringer Dehnung ein hochmoduliges Kraft-Dehnungs-Verhalten aufweist. Ein "hochmoduliges Material" ist ein Material, welches in Form einer Endlosfaser eine hochmodulige Endlosfaser ergibt. Ein "niedermoduliges Material" ist ein Material, welches in Form einer Endlosfaser eine niedermodulige Endlosfaser ergibt.

Dabei werden das niedermodulige Garn und das hochmodulige Garn anhand der in der nachfolgenden Tabelle 1 beschriebenen Werte in (mN/tex) definiert. Es ist die Kraft bestimmt, die jeweils auf ein Garn bei 1% Dehnung und bei 2% Dehnung aufgebracht werden muss, normiert auf die Feinheit des Garns in tex. Ermittelt wird nach ASTM D885M.

**Tabelle 1**

| Garn | 1% Dehnung | 2% Dehnung |
|---|---|---|
| Niedermodulig | < 150 mN/tex | < 200 mN/tex |
| Hochmodulig | > 300 mN/tex | > 500 mN/tex |

Ein Festigkeitsträger mit einem niedermoduligen Garn als Kern weist bei geringer Dehnung bis ca. 3% die für einen Festigkeitsträger der Gürtelbandage geforderten Kraft-Dehnungs-Eigenschaften auf. Bei einem niedermoduligen Stapelfasergarn erfolgt bei Zugbeanspruchung bei geringer Kraft eine Streckung der miteinander verdrehten Fasern begrenzter Länge und/oder ein Abgleiten der Fasern begrenzter Länge. Hierdurch kann auch ein Stapelfasergarn aus Fasern begrenzter Länge aus einem hochmoduligen Material ein niedermoduliges Stapelfasergarn sein. So kann es sich bei einem niedermoduligen Stapelfasergarn um ein Stapelfasergarn aus Fasern begrenzter Länge aus para-Aramid handeln, wobei para-Aramid ein hochmoduliges Material ist, welches in Form von Endlosfasern als hochmodulige Endlosfasern vorliegen kann. Ein niedermoduliges Stapelfasergarn ist über die Materialeigenschaften der Fasern bezüglich weiterer vorteilhafter Reifeneigenschaften, wie dem Rollwiderstand, optimierbar.

Die hochmoduligen Endlosfasern des Mantels sind in etwa helixförmig um den Kern gewunden angeordnet. Im Rahmen der Erfindung bedeutet "in etwa helixförmig", dass die Anordnung einer Endlosfaser geringfügig von einer helikalen Bahn abweichen kann. Eine solche Abweichung kann produktionstechnisch bedingt sein. So können mehrere oder alle Endlosfasern durch den Prozess des Windens um den Kern eine relative Drehung zueinander erfahren und/oder mehrere oder alle Endlosfasern liegen vor dem Prozess des Windens um den Kern als Garn vor, welcher einen prozessbedingten Schutzdrall aus der Garnproduktion aufweist. Endlosfasern, die vor dem Prozess des Windens um den Kern über den Schutzdrall hinaus zu einem Garn erstverdreht sind, sind, wenn im Garnverband um den Kern gewunden, im Sinne der Erfindung nicht "in etwa helixförmig" angeordnet.

Bei einem solchen Festigkeitsträger aus Kern und Mantel erfahren bei geringer Dehnung die in etwa helixförmig um den Kern gewunden angeordneten hochmoduligen Endlosfasern des Mantels v.a. eine konstruktive Dehnung. Bei größerer Verformung hingegen kommen die hochmoduligen Endlosfasern des Mantels direkt in ihre Eigendehnung. Da die hochmoduligen Endlosfasern keine wesentliche konstruktive Eigendehnung aufweisen, ist die Eigendehnung durch die Materialdehnung der hochmoduligen Endlosfasern bestimmt, wodurch der Festigkeitsträger bereits bei einer geringeren Dehnung in die Materialdehnung der hochmoduligen Endlosfasern kommt als bei einem entsprechenden Festigkeitsträger, dessen Mantel aus Garnen aus miteinander erstverdrehten (Endlos-)Fasern gebildet ist. Eine Gürtelbandage, die einen solchen erfindungsgemäßen Festigkeitsträger aufweist, erlangt bereits bei geringeren Geschwindigkeiten eine höhere Umfangssteifigkeit und zeichnet sich somit durch noch bessere Hochgeschwindigkeitseigenschaften aus.

Das Kraft-Dehnungs-Verhalten ermöglicht somit die Erhebung bei der Bombage und der Vulkanisation des Reifens und verleiht dem Reifen noch bessere Hochgeschwindigkeitseigenschaften.

Durch den Mantel aus nicht miteinander erstverdrehten Endlosfasern werden durch Erstverdrehung erzeugte mechanische Belastungen, welche besonders bei Endlosfasern mit höherem Elastizitätsmodul und / oder höherer Kristallinität in der Regel die Festigkeit reduzieren bzw. zu Faser-Brüchen führen können, auf die Endlosfasern reduziert. Die möglichweise bestehende Gefahr eines Bruchs der Endlosfasern ist somit vermieden, während die übrigen vorteilhaften Eigenschaften des Festigkeitsträgers aus Kern und Mantel erhalten sind. Ein solcher Festigkeitsträger zeichnet sich durch eine verbesserte Haltbarkeit aus.

Der Mantel aus in etwa helikal angeordneten und somit nicht miteinander vorverdrehten Endlosfasern weist zudem eine geringere Dicke auf als ein Mantel der sich v.a. dadurch unterscheidet, dass die Endlosfasern bündelweise erstverdreht sind. Hierdurch ist ein Festigkeitsträger bereitgestellt, der einen geringeren Durchmesser aufweist. Somit kann eine Festigkeitsträgerlage für elastomere Produkte bereitgestellt werden, die sich durch eine geringere Dicke auszeichnet, wodurch auch Gummierungsmaterial eingespart wird. Hierdurch sind Hysterese sowie Gewicht und Kosten reduziert. Beim Einsatz in Fahrzeugluftreifen ist somit ein weiter verringerter Rollwiderstand erwirkt.

Bei Zugbeanspruchung bei geringer Kraft erfolgt eine Streckung der miteinander verdrehten Fasern begrenzter Länge und/oder ein Abgleiten der Fasern begrenzter Länge aus dem hochmoduligen Material. Gleichzeitig ist der Festigkeitsträger über die Verwendung von hochmoduligem Material für die Fasern des Kerns bezüglich weiterer Eigenschaften optimierbar. Bei der Verwendung des Festigkeitsträgers als Festigkeitsträger einer Festigkeitsträgerlage eines Reifens, insbesondere einer in Umfangsrichtung gewundenen Gürtelbandage, ist eine ausreichende Dehnung im Reifenbauprozess gewährleistet. Im fertigen Reifen liegen die hochmoduligen Endlosfasern des Mantels bei einer solchen Gürtelbandage annähernd in Umfangsrichtung gestreckt vor und übernehmen eine tragende Funktion im Reifeneinsatz.

Als besonders geeignet hat es sich herausgestellt, wenn das Stapelfasergarn Fasern aus einem aromatischen Polyamid oder aus Carbon oder aus Glas oder aus Basalt, bevorzugt aus Aramid, besonders bevorzugt aus para-Aramid, aufweist. Hierbei handelt es sich um Fasern aus hochmoduligen Materialen. Ein Festigkeitsträger mit einem Kern aus einem Stapelfasergarn aus Aramid zeichnet sich durch eine geringe Hysterese aus, was sich positiv auf die Hochgeschwindigkeits- sowie auf die Rollwiderstandseigenschaften des Reifens auswirkt.

In einer weiteren bevorzugten Ausführungsform weist das Stapelfasergarn Fasern aus einem niedermoduligen Material auf. Diese Materialien weisen ein verglichen mit den hochmoduligen Endlosfasern des Mantels niedrigeres Elastizitätsmodul auf. Der Einsatz eines solchen Garns im Kern des Festigkeitsträgers ermöglicht bei geringer Verformung einen geringen Elastizitätsmodul des Festigkeitsträgers und somit eine ausreichende Erhebung bei der Bombage und der Vulkanisation des Reifens.

Als besonders geeignet hat es sich herausgestellt, wenn das Stapelfasergarn Fasern aus einem aliphatischen Polyamid (PA) oder aus Polyoxadialzol oder aus Rayon oder aus Naturfasern auf.

Vorteilhafterweise ist der Polyester ausgewählt aus der Gruppe aufweisend Polyethylenterephthalat (PET) und/oder Polyethylennaphthalat (PEN) und/oder Polybutylenterephthalat (PBT) und/oder Polycarbonat (PC), welches formal als Polyester betrachtet werden kann. Bevorzugt ist die Verwendung von PET, besonders bevorzugt die Verwendung von HMLS- (High Modulus Low Shrinkage) und/oder HMNS (Regular)-PET.

Das Polyamid ist ausgewählt aus der Gruppe aufweisend Polyamid 6 (PA 6) und/oder Polyamid 66 (PA 66) und/oder Polyamid 12 (PA 12) und/oder Polyamid 11 (PA 11) und/oder Polyamid 1313 (PA 1313) und/oder Polyamid 4 (PA 4) und/oder Polyamid 7 (PA 7) und/oder Polyamid 8 (PA 8) und/oder Polyamid 9 (PA 9) und/oder Polyamid 46 (PA 46) und/oder Polyamid 610 (PA 610) und/oder Polyamid 612 (PA 612) und/oder Polyamid 69 (PA 69) und/oder Polyamid 66/6 (PA 66/6). Bevorzugt ist die Verwendung von PA 6 und/oder PA 66, besonders bevorzugt ist die Verwendung von PA 66.

Naturfasern können insbesondere Fasern aus Hanf, Jute, Baumwolle oder Flachs sein.

In einer vorteilhaften Ausführungsform sind die Endlosfasern des Mantels aus Aramid oder aus Carbon oder aus Glas oder aus Basalt, bevorzugt aus para-Aramid, gebildet. Der, insbesondere vergleichsweise zu PES oder PA, höhere, Elastizitätsmodul solcher Endlosfasern ermöglicht eine gute Hochgeschwindigkeitstauglichkeit beim Einsatz im Fahrzeugluftreifen.

Eine besonders einfache Ausführungsform ergibt sich, wenn alle Fasern des Stapelfasergarns aus einem Material gebildet sind und / oder wenn alle Endlosfasern des Mantels aus einem Material gebildet sind.

In einer bevorzugten Ausführungsform ist der Kern des Festigkeitsträgers aus einem niedermoduligen Aramid-Stapelfasergarn und der Mantel aus Aramid-Endlosfasern gebildet. Besonders bevorzugt handelt es sich jeweils um para-Aramid. Hierdurch ist ein Festigkeitsträger zur Verfügung gestellt, der besonders gute Hystereseeigenschaften aufweist. Ein Fahrzeugluftreifen, der eine Festigkeitsträgerlage mit solchen Festigkeitsträgern aufweist, hat einen besonders vorteilhaften Rollwiderstand.

Als vorteilhaft für die Eigenschaften des Festigkeitsträger hat es sich herausgestellt, wenn die Länge der Fasern des Stapelfasergarns 10 mm bis 100 mm, bevorzugt 20 mm bis 80 mm, besonders bevorzugt 30 mm bis 70 mm, beträgt.

Vorteilhaft ist es, wenn der Kern eine Feinheit von höchstens 1100 dtex und / oder der Mantel eine Feinheit von höchstens 2200 dtex aufweist. Somit ist ein dünner Festigkeitsträger zur Verfügung gestellt, der beim Einsatz in einer Festigkeitsträgerlage eines elastomeren Erzeugnisses ein vorteilhaftes Hystereseverhalten aufweist.

Vorteilhaft ist es auch, wenn die Endlosfasern des Mantels mit einer Windungszahl von 100 tpm bis 1000 tpm, bevorzugt von 200 tpm bis 800 tpm, besonders bevorzugt von 300 tpm bis 700 tpm, um den Kern gewunden sind. Ein erfindungsgemäßer Festigkeitsträger solcher Konstruktion zeichnet sich durch ein Kraft-Dehnungs-Verhalten aus, das bei Verwendung des Festigkeitsträger in einer Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit und/oder bessere Rollwiderstandseigenschaften verleiht.

Die Fasern des Kerns können in die gleiche Richtung gedreht sein wie die Endlosfasern des Mantels. Sie können aber auch in die andere Richtung gedreht sein. Bevorzugt weisen die Fasern des Stapelfasergarns und die Endlosfaser entgegengesetzte Drehrichtung auf. Bevorzugt ist es auch, wenn ihre Windungszahlen in etwa gleich sind.

Ein vorteilhafter Festigkeitsträger aufweisend einen Kern und einen diesen umgebenden Mantel ergibt sich, wenn die Endlosfasern des Mantels um den Kern gewickelt, verdrillt oder gesponnen sind. Hierdurch kann eine gleichmäßige Verteilung der Endlosfasern um den Kern und somit eine geringe Dicke des Mantels erreicht werden.

Um die Haftung von textilen Festigkeitsträgern zum Gummi zu gewährleisten, ist es vorteilhaft, wenn die Festigkeitsträger mit einem RFL-Dip (Resorcin-Formaldehyd-Latex-Lösung) zur Haftung zwischen Gummi und Festigkeitsträger gedippt sind. Es sind aber auch alle weiteren der fachkundigen Person bekannten Verfahren und Haftmittel zur Imprägnierung denkbar.

Eine Festigkeitsträgerlage für elastomere Erzeugnisse, insbesondere für Fahrzeugluftreifen, die solche Festigkeitsträger enthält, weist neben einem vorteilhaften Kraft-Dehnungs-Verhalten eine gut Haltbarkeit auf. Vorteilhaft ist dies auch für Fördergurte, Antriebsriemen, Schläuche oder Luftfederbälge. Die Festigkeitsträger sind dabei innerhalb der Lage im Wesentlichen parallel zueinander angeordnet.

Verwendet man wenigstens eine vorbeschriebene Festigkeitsträgerlage in einem Fahrzeugluftreifen, vorzugsweise als Gürtelbandage, so weist der Reifen eine verbesserte Haltbarkeit auf und ermöglicht einen problemlosen Reifenbau samt Vulkanisation und weist eine verbesserte Hochgeschwindigkeitstauglichkeit und verbesserte Rollwiderstandseigenschaften auf.

Weitere Merkmale, Vorteile und Einzelheiten der Erfindung werden nun anhand der Figuren, die schematische Ausführungsbeispiele darstellen, näher beschrieben. Dabei zeigen die:
Fig. 1 einen Teilquerschnitt eines Fahrzeugluftreifens,
Fig. 2 einen Querschnitt eines erfindungsgemäßen Festigkeitsträgers.

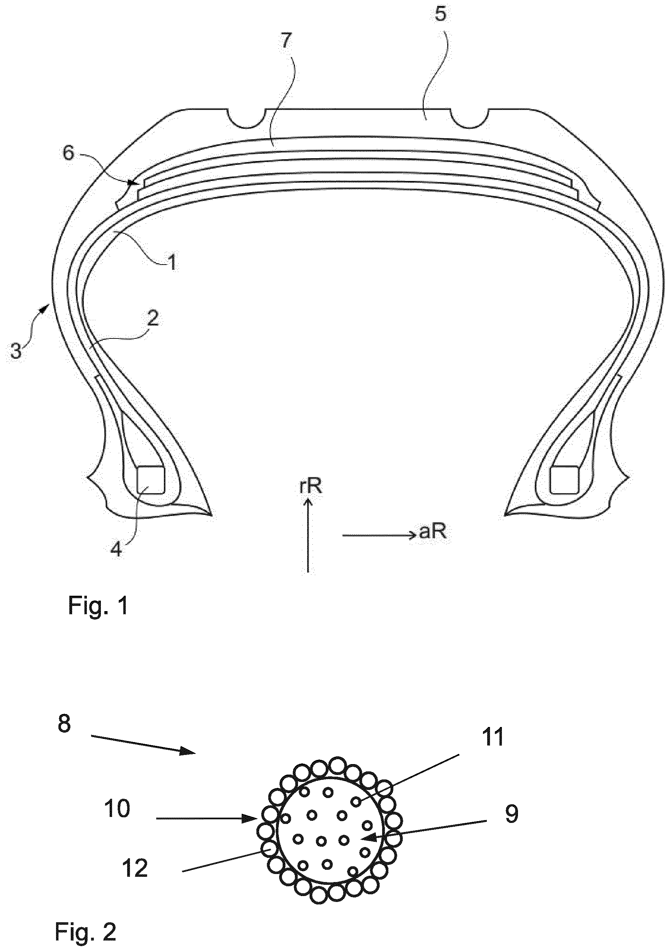

Die Fig. 1 zeigt einen Teilquerschnitt durch einen Fahrzeugluftreifen in Radialbauart für einen Personenkraftwagen. Die wesentlichen Bauteile, aus welchen sich der dargestellte Fahrzeugluftreifen zusammensetzt, sind eine weitgehend luftundurchlässige Innenschicht 1, eine zumindest eine Festigkeitsträgerlage beinhaltende Radialkarkasse 2, die in herkömmlicher Weise vom Zenitbereich des Fahrzeugluftreifens über die Seitenwände 3 bis in die Wulstbereiche reicht und dort durch Umschlingen zugfester Wulstkerne 4 verankert ist, einen radial oberhalb der Karkasse 2 befindlichen profilierten Laufstreifen 5 und einen zwischen dem Laufstreifen 5 und der Karkasse 2 angeordneten, zumindest zwei Festigkeitsträgerlagen beinhaltenden Gürtel 6, welcher in herkömmlicher Weise radial außen mit der zumindest einlagig ausgeführten Gürtelbandage 7 abgedeckt ist. Die Gürtelbandage 7 deckt die Gürtelkanten ab und beinhaltet textile Festigkeitsträger 8 (siehe Fig. 2), die im Wesentlichen in Umfangsrichtung des Fahrzeugluftreifens angeordnet und in Gummi eingebettet sind. In diesem Ausführungsbeispiel ist die Gürtelbandage 7 - wie bevorzugt - einlagig ausgeführt.

Die Fig. 2 zeigt einen Querschnitt eines erfindungsgemäßen Festigkeitsträgers 8. Der Festigkeitsträger 8 weist einen geradlinigen Kern 9 aus einer Stapelfaser 9 aufweisend Fasern 11 und einen diesen Kern 9 umgebenden Mantel 10 aus Endlosfasern 12 auf. Um die Klarheit der schematischen Darstellung zu erhöhen sind nur einige Fasern 11 des Kerns 9 exemplarisch dargestellt und auch der Durchmesser (und die Anzahl) der Endlosfasern 12 bzw. der Durchmesser der Fasern 11 relativ zum Durchmesser des Stapelfasergarns 9 entsprechen nicht den wirklichen Größenrelationen.

Der Kern 9 ist aus genau einem niedermoduligen Stapelfasergarn aus Fasern 11 begrenzter Länge, welche miteinander erstverdreht sind, gebildet. Die Fasern 11 des Stapelfasergarns sind dabei aus para-Aramid gebildet. Die Länge der Fasern 11 beträgt in etwa 38 mm, der Twist-Faktor in etwa 50 und die Feinheit des Mantels beträgt 200 dtex bis 2000 dtex.

Der Mantel 10 besteht aus textilen hochmoduligen Endlosfasern 12, welche den Kern 9 in etwa helixförmig umwinden. Die hochmoduligen Endlosfasern 12 bestehen aus para-Aramid. Der Mantel 10 weist eine Feinheit von in etwa 200 dtex bis 2000 dtex auf und die Endlosfasern 12 des Mantels 10 sind mit einer Windungszahl von in etwa 200 tpm bis 500 tpm um den Kern 9 gewickelt, verdrillt oder gesponnen. Die Fasern 11 des Kerns 9 und die Endlosfasern 12 des Mantels 10 weisen eine entgegengesetzte Drehrichtung auf.

Zur besseren Haftung zwischen Festigkeitsträger und Gummi ist der Festigkeitsträger 8 mit einem RFL-Dip gedippt. Ein solcher Festigkeitsträger 8 eignet sich hervorragend als Festigkeitsträger der Gürtelbandage 7 eines wie in Fig. 1 gezeigten Fahrzeugluftreifens.

### Bezugszeichenliste

### (Teil der Beschreibung)

- 1: Innenschicht
- 2: Karkasse
- 3: Seitenwand
- 4: Wulstkern
- 5: profilierter Laufstreifen
- 6: Gürtel
- 7: Gürtelbandage
- 8: Festigkeitsträger
- 9: Kern
- 10: Mantel
- 11: Faser begrenzter Länge
- 12: Endlosfaser

- aR: axiale Richtung
- rR: radiale Richtung

## Patentansprüche

1. Festigkeitsträger (8) für elastomere Erzeugnisse, insbesondere für die Gürtelbandage (7) von Fahrzeugluftreifen,
• wobei der Festigkeitsträger (8) einen geradlinigen Kern (9) und einen diesen Kern (9) umgebenden Mantel (10) aufweist,
• wobei der Kern (9) aus genau einem textilen Garn aus miteinander erstverdrehten Fasern gebildet ist und
• wobei der Mantel (10) textile hochmodulige Endlosfasern (12) aufweist,
**dadurch gekennzeichnet, dass**
• das Garn des Kerns (9) ein niedermoduliges Stapelfasergarn aus Fasern (11) begrenzter Länge, welche miteinander erstverdreht sind, ist,
• dass die hochmoduligen Endlosfasern (12) des Mantels (10) den Kern (9) in etwa helixförmig umwinden und
• dass das Stapelfasergarn Fasern (11) begrenzter Länge aus einem hochmoduligen Material aufweist.

2. Festigkeitsträger (8) nach Anspruch 1, **dadurch gekennzeichnet, dass** das Stapelfasergarn Fasern (11) begrenzter Länge aus einem aromatischen Polyamid oder aus Carbon oder aus Glas oder aus Basalt, bevorzugt aus Aramid, besonders bevorzugt aus para-Aramid, aufweist.

3. Festigkeitsträger (8) nach zumindest einem der vorangehenden Ansprüche, **dadurch gekennzeichnet, dass** das Stapelfasergarn Fasern (11) begrenzter Länge aus einem niedermoduligen Material aufweist.

4. Festigkeitsträger (8) nach zumindest einem der vorangehenden Ansprüche, **dadurch gekennzeichnet, dass** das Stapelfasergarn Fasern (11) begrenzter Länge aus Polyester oder aus einem aliphatischen Polyamid oder aus Polyoxadialzol oder aus Rayon oder aus Naturfasern, bevorzugt aus Polyethylenterephthalat oder aus Polyamid 66, aufweist.

5. Festigkeitsträger (8) nach zumindest einem der vorangehenden Ansprüche, **dadurch gekennzeichnet, dass** die hochmoduligen Endlosfasern (12) des Mantels (10) aus Aramid oder aus Carbon oder aus Glas oder aus Basalt, bevorzugt aus para-Aramid, gebildet sind.

6. Festigkeitsträger (8) nach zumindest einem der Ansprüche 1, 2 oder 5, **dadurch gekennzeichnet, dass** der Kern (9) aus einem Aramid-Stapelfasergarn und der Mantel (10) aus Aramid-Endlosfasern (12) gebildet ist.

7. Festigkeitsträger (8) nach zumindest einem der vorangehenden Ansprüche, **dadurch gekennzeichnet, dass** die Länge der Fasern (11) begrenzter Länge des Stapelfasergarns 10 mm bis 100 mm, bevorzugt 20 mm bis 80 mm, besonders bevorzugt 30 mm bis 70 mm, beträgt.

8. Festigkeitsträger (8) nach zumindest einem der vorangehenden Ansprüche, **dadurch gekennzeichnet, dass** die Feinheit des Kerns (9) höchstens 1100 dtex und/oder die Feinheit des Mantels (10) höchstens 2200 dtex beträgt.

9. Festigkeitsträger (8) nach zumindest einem der vorangehenden Ansprüche, **dadurch gekennzeichnet, dass** sich die Endlosfasern (12) des Mantels (10) mit einer Windungszahl von 100 tpm bis 1000 tpm, bevorzugt von 200 tpm bis 800 tpm, besonders bevorzugt von 300 tpm bis 700 tpm, um den Kern (9) winden.

10. Festigkeitsträgerlage für elastomere Erzeugnisse, insbesondere für Fahrzeugluftreifen, enthaltend Festigkeitsträger (8) nach zumindest einem oder mehreren der Ansprüche 1 bis 9.

11. Fahrzeugluftreifen aufweisend eine Festigkeitsträgerlage der Gürtelbandage (7) aufweisend zumindest einen Festigkeitsträger (8) nach zumindest einem der Ansprüche 1 bis 9.

## Claims

1. Reinforcing support (8) for elastomeric products, in particular for the belt bandage (7) of vehicle pneumatic tyres,
• the reinforcing support (8) having a rectilinear core (9) and a shell (10) which surrounds the said core (9),
• the core (9) being formed from precisely one textile yarn comprising fibres which are twisted together, and
• the shell (10) comprising textile, high-modulus endless fibres (12),
**characterized in that**
• the yarn of the core (9) is a low-modulus staple fibre yarn comprising fibres (11) of limited length which are twisted together,
• **in that** the high-modulus endless fibres (12) of the shell (10) entwine the core (9) approximately helically, and
• **in that** the staple fibre yarn comprises fibres (11) of limited length made from a high-modulus material.

2. Reinforcing support (8) according to Claim 1, **characterized in that** the staple fibre yarn comprises fibres (11) of limited length made from an aromatic polyamide or from carbon or from glass or from basalt, preferably from aramid, particularly preferably from para-aramid.

3. Reinforcing support (8) according to at least one of the preceding claims, **characterized in that** the staple fibre yarn comprises fibres (11) of limited length made from a low-modulus material.

4. Reinforcing support (8) according to at least one of the preceding claims, **characterized in that** the staple fibre yarn comprises fibres (11) of limited length made from polyester or from an aliphatic polyamide or from polyoxadiazole or from rayon or from natural fibres, preferably from polyethylene terephthalate or from polyamide 66.

5. Reinforcing support (8) according to at least one of the preceding claims, **characterized in that** the high-modulus endless fibres (12) of the shell (10) are formed from aramid or from carbon or from glass or from basalt, preferably from para-aramid.

6. Reinforcing support (8) according to at least one of Claims 1, 2 or 5, **characterized in that** the core (9) is formed from an aramid staple fibre yarn and the shell (10) is formed from endless aramid fibres (12).

7. Reinforcing support (8) according to at least one of the preceding claims, **characterized in that** the length of the fibres (11) of limited length of the staple fibre yarn is from 10 mm to 100 mm, preferably from 20 mm to 80 mm, particularly preferably from 30 mm to 70 mm.

8. Reinforcing support (8) according to at least one of the preceding claims, **characterized in that** the yarn count of the core (9) is at most 1100 dtex and/or the yarn count of the shell (10) is at most 2200 dtex.

9. Reinforcing support (8) according to at least one of the preceding claims, **characterized in that** the endless fibres (12) of the shell (10) wind around the core (9) with a number of turns of from 100 tpm to 1000 tpm, preferably of from 200 tpm to 800 tpm, particularly preferably of from 300 tpm to 700 tpm.

10. Reinforcing support layer for elastomeric products, in particular for vehicle pneumatic tyres, comprising reinforcing supports (8) according to at least one or more of Claims 1 to 9.

11. Vehicle pneumatic tyre having a reinforcing support layer of the belt bandage (7) having at least one reinforcing support (8) according to at least one of Claims 1 to 9.

## Revendications

1. Support de fixation pour produits en élastomère, en particulier pour le bandage de ceinture (7) de pneumatiques de véhicules,
• dans lequel le support de fixation (8) présente un noyau rectiligne (9) et une enveloppe (10) entourant ce noyau (9),
• dans lequel le noyau (9) est formé exactement d'un fil textile composé de fibres pré-torsadées entre elles, et
• dans lequel l'enveloppe (10) présente des fibres textiles sans fin à haut module (12),
**caractérisé en ce que**
• le fil du noyau (9) est un fil en fibres empilées à bas module en fibres (11) de longueur limitée, qui sont pré-torsadées entre elles,
• les fibres sans fin à haut module (12) de l'enveloppe (10) entourent le noyau (9) sensiblement en forme d'hélice, et
• le fil en fibres empilées présente des fibres (11) de longueur limitée en un matériau à haut module.

2. Support de fixation (8) selon la revendication 1, **caractérisé en ce que** le fil en fibres empilées présente des fibres (11) de longueur limitée en un polyamide aromatique ou en carbone ou en verre ou en basalte, de préférence en aramide, de préférence encore en para-aramide.

3. Support de fixation (8) selon au moins une des revendications précédentes, **caractérisé en ce que** le fil en fibres empilées présente des fibres (11) de longueur limitée en un matériau à bas module.

4. Support de fixation (8) selon au moins une des revendications précédentes, **caractérisé en ce que** le fil en fibres empilées présente des fibres (11) de longueur limitée en polyester ou en un polyamide aliphatique ou en polyoxadiazole ou en rayonne ou en fibres naturelles, de préférence en téréphtalate de polyéthylène ou en polyamide 66.

5. Support de fixation (8) selon au moins une des revendications précédentes, **caractérisé en ce que** les fils sans fin à haut module (12) de l'enveloppe (10) sont formés en aramide ou en carbone ou en verre ou en basalte, de préférence en para-aramide.

6. Support de fixation (8) selon au moins une des revendications 1, 2 ou 5, **caractérisé en ce que** le noyau (9) est formé en un fil en fibres empilées en aramide et l'enveloppe (10) est formée de fibres sans fin (12) en aramide.

7. Support de fixation (8) selon au moins une des revendications précédentes, **caractérisé en ce que** la longueur des fibres (11) de longueur limitée du fil en fibres empilées vaut 10 mm à 100 mm, de préférence 20 mm à 80 mm, de préférence encore 30 mm à 70 mm.

8. Support de fixation (8) selon au moins une des revendications précédentes, **caractérisé en ce que** la finesse du noyau (9) vaut au plus 1100 dtex et/ou la finesse de l'enveloppe (10) vaut au plus 2200 dtex.

9. Support de fixation (8) selon au moins une des revendications précédentes, **caractérisé en ce que** les fibres sans fin (12) de l'enveloppe (10) s'enroulent autour du noyau (9) avec un nombre de spires de 100 tpm à 1000 tpm, de préférence de 200 tpm à 800 tpm, de préférence encore de 300 tpm à 700 tpm.

10. Couche de supports de fixation pour des produits en élastomère, en particulier pour des pneumatiques de véhicules, contenant des supports de fixation (8) selon au moins une ou plusieurs des revendications 1 à 9.

11. Pneumatique de véhicule présentant une couche de supports de fixation du bandage de ceinture (7), présentant au moins un support de fixation (8) selon au moins une des revendications 1 à 9.
